# EUROPEAN PATENT APPLICATION

(11) **EP 3 434 158 A1**
(43) Date of publication of application: **30.01.2019**
(21) Application number: 17769504.6
(22) Date of filing: 17.03.2017
(51) Int. Cl.: A47J 31/04, B65D 85/804

(54) **DISPOSABLE DEVICE FOR PREPARING INFUSIONS**

(30) Priority: 21.03.2016 ES 201630333
(71) Applicant: Sanchez Carrasco, Isidro Aythami, 35001 Las Palmas de Gran Canaria (ES)
(72) Inventor: Sanchez Carrasco, Isidro Aythami, 35001 Las Palmas de Gran Canaria (ES)
(86) International application number: PCT/ES2017/070154
(87) International publication number: WO 2017/162898

(57) **Abstract**

Consisting of a container suitable for microwave ovens, divided internally into three compartments connected to one other by a funnel and a lifting duct, the water being stored in the lower compartment, the infusion capsule being placed in the intermediate compartment, and the prepared infusion being collected in the upper compartment. A transparent longitudinal section allows the contents inside to be seen. The infusion is made by placing the container in a microwave oven, which heats the water from the lower compartment until it turns into steam, making it go up the funnel and through the capsule of the infusion, dragging the extract with it. This flavored vapor rises through a lifting duct to the upper compartment, where it is stored. When the process ends and the user drinks the content, the container should be discarded.

## Description

### SUBJECT OF THE INVENTION

The invention patent referred to in this report consists of a vessel specially designed as a device for the preparation of hot infusions for use in microwave ovens, representing an evident and substantial improvement over the current state of the art.

### AREA OF USE FOR THE INVENTION

The area of use for the present invention encompasses household and industrial utensils used for the preparation of hot infusions.

The purpose of this invention is to introduce a new concept in the preparation of infusions using a microwave oven, thus facilitating their preparation and allowing direct consumption of the infusion by the user through such a device.

### BACKGROUND OF THE INVENTION.

The conventional systems for the preparation of infusions, are based on the prior heating of the water and its later addition to a cup in which there is a bag that contains the product, which is pressed and stirred continuously by the user until the extract remains inside the cup. In the case of coffee, which is only another type of infusion, the water is heated until it evaporates, causing it to pass through a perforated funnel in which the ground coffee is located.

The devices designed at the moment are made up of several modular elements adjustable among themselves. It is necessary to assemble and disassemble them both when adding the water and the product, and when cleaning them for later reuse.

Also, many of these devices are designed to be externally heated, so their external structure and internal components are usually metallic, which makes them unsuitable for use inside microwave ovens.

In addition, being made up of metallic elements, the vast majority of devices require a longer waiting time before the infusion can be consumed, in order to avoid the risk of burns.

### DESCRIPTION OF THE INVENTION

The invention consists of the introduction of a new concept consisting of a vessel-shaped container, internally divided into three compartments, whose distribution and internal geometry allow all the processes necessary for the pressurized processing of hot infusions to take place, as well as their subsequent consumption as a prepared extract.

Also, the system avoids the need to spend time cleaning the appliance, since it is single use, and therefore disposable and easily marketable.

According to the invention, the assembly is suitable for the preparation of infusions using the microwave oven as a heat source. The invention will be manufactured with materials suitable for use in microwave ovens. Also, since both the water and the infusion bag are already included in the glass, the glass will have a longitudinal section with a transparent section that allows the content to be seen, or it may be constructed entirely with a transparent material.

The internal compartments can be an integral part of the vessel, or be subject to it by means of heat sealing, so that correct operation and safe use is guaranteed.

In order to make the infusion work by means of energy obtained from a microwave oven, the invention has a first compartment, located at its base, in which the water with which the infusion is to be made is stored. Said compartment is limited on top by a funnel, which has a thin membrane located in its upper opening that is broken by the steam when it starts to flow upwards.

Located above the water compartment is the second compartment, in which the bag with the infusion is placed. In this manner, vapor coming from the lower compartment passes through the preparation bag located in the intermediate compartment and carries the extract to the upper compartment by means of steam pressure.

Finally, the steam from the extract of the infusion rises through a duct located above the intermediate compartment, its geometry favoring the condensation of the vapor, bringing it to a liquid state and storing the infusion in the upper compartment, from where it can be enjoyed by the user. Said conduit also has an upper part in the form of an inclined hood which avoids uncontrolled splashing.

Covering the mouth of the glass is a tight lid that protects the content and the quality of the product inside from the surroundings. A rigid lid is placed on top of this sealing lid, which allows the temperature of the infusion to be preserved once the sealing lid has been completely removed, facilitating at the same time the safe handling and storage of the glass. Likewise, it is possible to place the necessary complements to drink the infusion, such as a spoon, sugar, milk, etc., between the sealing lid and the upper lid.

In the original state of the vessel, that is with a closed sealing lid, the third compartment, or upper compartment, is filled with nitrogen gas, which protects the product from atmospheric oxidation. When one wishes to prepare the infusion, the sealing lid is partially removed, so that the nitrogen escapes and the vapor can flow freely upwards once the boiling begins.

### DRAWINGS

To better understand the scope of this invention, we will describe it on the attached drawings in which a preferred design of the same has been given by way of example, but without limitation.

In the drawings:
- Fig. 1 shows a view of the upper lid, the sealing lid and the transparent longitudinal section located on the surface of the vessel.
- Fig. 2 shows a detail of the opening system of the sealing lid.
- Fig. 3 shows a view of the internal structure of the vessel.
- Fig. 4 shows the arrangement of the infusion capsule within the intermediate compartment.

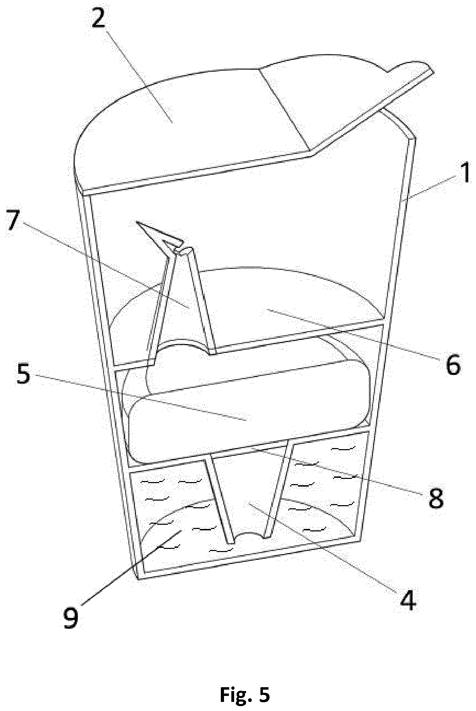

- Fig. 5 shows a cross section of the assembly.

We can verify that, in the drawings, we have represented (1) the glass, (2) the sealing lid, (3) the upper lid, (4) the funnel, (5) the capsule or infusion bag, (6) upper compartment to contain the extract of the infusion, (7) the elevation and exit duct of the coffee extract, (8) the separation membrane and (9) the water.

### PREFERRED EMBODIMENT OF THE INVENTION

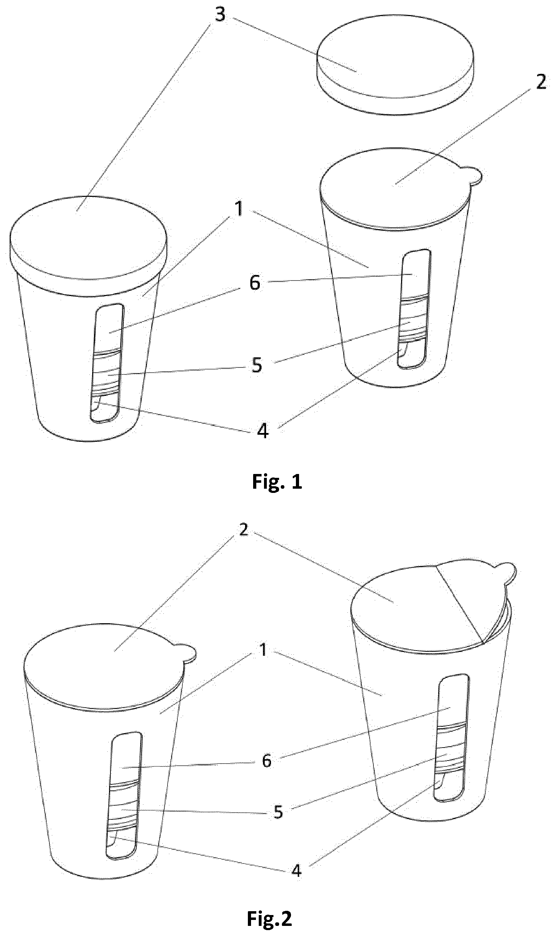

As can be seen in figure 1, the vessel (1) is divided into three sections, also having a transparent longitudinal section that allows one to see the contents of its interior.

Likewise, in figure 1 we see that the vessel (1) is closed at the factory by means of a hermetic cover (2) and an upper cover (3), which guarantee that the product is sealed and facilitates its transport. In this figure we also see how the top cover is removed, while in figure 2 we see how the sealing lid is opened.

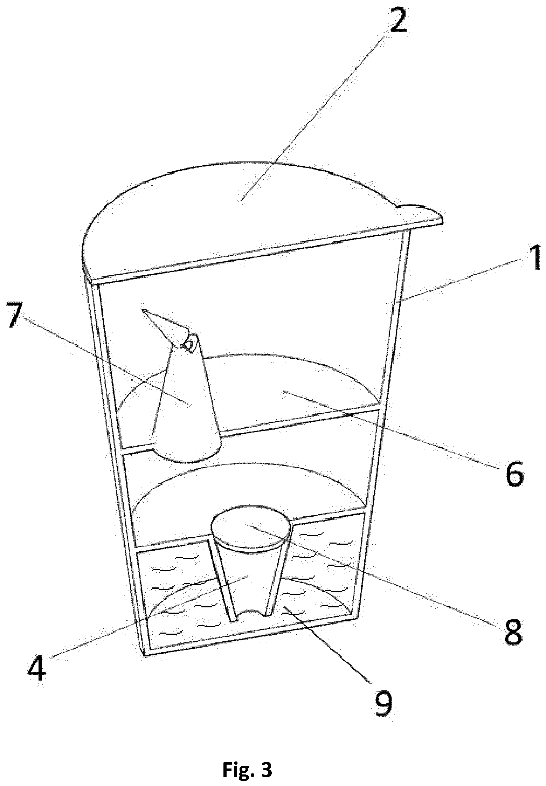

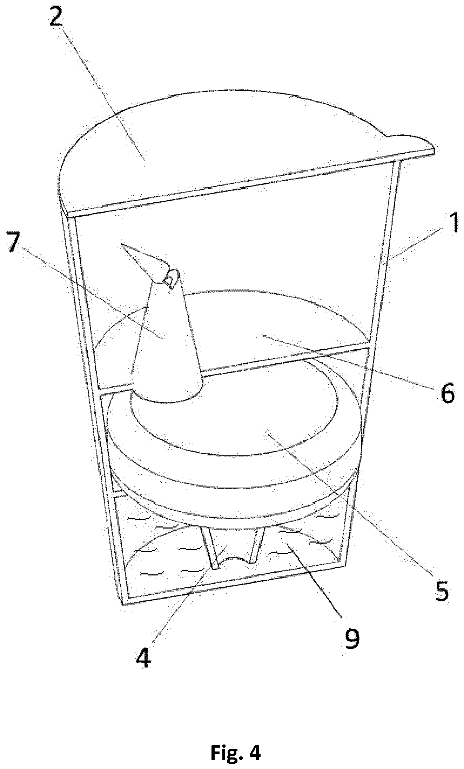

As can be seen in figures 3 and 4, the lower compartment of the vessel (1) stores the water (9) with which the infusion is to be made, being limited below by the bottom of the vessel and above by the funnel (4). Said funnel has a separation membrane (8), which prevents contact of the water (9) with the capsule (5) during the storage of the vessel.

On the other hand, the capsule is inside the intermediate compartment, which is limited below by the funnel (4) and above by the upper compartment to contain the extract of the infusion (6). In the original closed factory condition, this upper compartment, in order to contain the extract of the infusion (6), is filled with nitrogen to prevent oxidation of the product of the infusion capsule (5). Once the water has evaporated (9) and steam distillation has been performed on the extract, the condensed liquid is collected.

We also see in figures 3 and 4 that the lift and outlet duct (7) is integrally attached to the structure of the upper compartment to contain the extract of the infusion (6), and has a small cap that offers protection from uncontrolled splashes during the process.

The invention will be made with materials suitable for use in microwave ovens, endowed with sufficient strength, and made by the appropriate processes (molding, heat sealing, etc.), which can withstand the pressure exerted by the steam distillation generated inside the glass during the process.

Within the scope of the invention are the detail variants, which are also protected. The shape and manufacturing materials of the vessel may vary, as well as the location of the transparent longitudinal section, the shape and arrangement of the sealing lid, the shape of the top lid, the arrangement of the external compartments, the internal geometry of the receptacle, the shape of the funnel, the location of the separation membrane, the shape and location of the lifting duct, as well as the shape and arrangement of the anti-splash cap.

## Claims

1. **Disposable infusion device, characterized by** the fact of having a compartmented container suitable for use in a microwave oven that is divided internally into three compartments interconnected by a funnel (4) and a riser (7), with water (9) incorporated inside the lower compartment, where there is an infusion capsule (5) inside the intermediate compartment.

2. **Disposable infusion device,** according to claim 1, where the compartmentalized container contains nitrogen in the upper compartment to contain the extract of the infusion (6), which is conveniently closed by a sealing lid (2).

3. **Disposable infusion device,** according to claim 1, which has a transparent section running longitudinally on the surface of the vessel.
